# EUROPÄISCHE PATENTSCHRIFT

(11) **EP 3 085 996 B1**
(45) Veröffentlichungstag und Bekanntmachung des Hinweises auf die Patenterteilung: **26.09.2018**
(21) Anmeldenummer: 15164408.5
(22) Anmeldetag: 21.04.2015
(51) Int. Cl.: F16H 57/04

(54) **GETRIEBE UND VERFAHREN ZUM BETRIEB EINES GETRIEBES**
GEAR BOX AND METHOD FOR OPERATING SAME
ENGRENAGE ET PROCÉDÉ DE FONCTIONNEMENT D'UN ENGRENAGE

(43) Veröffentlichungstag der Anmeldung: 26.10.2016
(73) Patentinhaber: Flender GmbH, 46395 Bocholt (DE)
(72) Erfinder: Reimers, Jan-Dirk, 52074 Aachen (DE)
(74) Vertreter: Maier, Daniel Oliver

(56) Entgegenhaltungen:
- EP-A1- 0 346 371
- DE-A1-102009 004 942
- US-A- 2 802 548

## Beschreibung

Die Erfindung betrifft ein Getriebe und speziell ein Getriebe, das zur Entwärmung Mittel zur Kühlung eines in dem Getriebe vorhandenen Schmierstoffs aufweist. Die Erfindung betrifft im Weiteren auch ein Verfahren zum Betrieb eines solchen Getriebes.

Getriebe werden durch die während des Betriebs anfallende Verlustleistung oftmals sehr warm. Eine sich zum Beispiel im Getriebe einstellende Schmierstofftemperatur limitiert die zulässige mechanische Grenzleistung des jeweiligen Getriebes. Zur passiven Kühlung des Getriebes sind Lüfterräder und Kühlrippen bekannt, wie dies zum Beispiel in der DE 10 2009 014 317 A1 beschrieben ist. Zur aktiven Kühlung sind externe und als Wärmetauscher fungierende Schmierstoffkühlanlagen bekannt, die jedoch die Gesamtkosten eines Getriebes nicht unerheblich erhöhen und zudem Bauraum beanspruchen sowie eine relevante Ausfallrate aufweisen und dementsprechenden Überwachungsaufwand benötigen, so dass diese auf Seiten des Verwenders des jeweiligen Getriebes oft unerwünscht sind.

Aus der DE 10 2009 014 316 A1, der DE 10 2009 014 318 A1 und der DE 10 2009 061 042 A1 ist ein Getriebe mit einer einem Getriebezahnrad zugeordneten Öl-Abstreifvorrichtung bekannt. Mittels der Öl-Abstreifvorrichtung wird Getriebeöl aus dem Getriebeinneren oberhalb des Schmierstoffniveaus in eine Rohrleitung und mittels der Rohrleitung in einen Kühlluftstrom gefördert und gelangt anschließend wieder in das Innere des Getriebes.

Aus der DE 10 2009 004 942 A1 ist ein Getriebe bekannt, bei dem mittels eines Tellerrads des Getriebes Schmierstoff aus dem Schmierstoffsumpf zur Oberseite des Getriebegehäuses und in einen dort gebildeten Ölkanal gefördert wird. Mittels des Ölkanals gelang der Schmierstoff in einen externen Ölbehälter und von dort unter Gravitationseinfluss wieder zurück in den Schmierstoffsumpf. Durch die Ableitung des Schmierstoffs in den externen Ölbehälter soll eine variable Einstellung des Schmierstoffniveaus im Innern des Getriebegehäuses möglich sein. Zur Kühlung des ausgeleiteten Schmierstoffs können eine außerhalb des Getriebes verlaufende Verbindungsleitung vom externen Ölbehälter zum Getriebegehäuse sowie der Ölbehälter selbst mittels einer externen Kühlvorrichtung oder mittels Kühlrippen gekühlt sein.

Aus der gattungsgemässen US 2,802,548 ist ein Getriebe bekannt, bei dem eine Kühlung von in einem Getriebegehäuse enthaltenem Getriebeöl auf Basis eine Bewegung des Getriebeöls im Innern des Getriebegehäuses und resultierender Druckverhältnisse erfolgt. Einer der dort beschriebenen Anwendungsfälle befasst sich mit einem aufgrund einer Rotation eines Getriebeelements im Innern des Getriebegehäuses randseitig erhöhten Ölniveaus und damit randseitig erhöhten Druck, so dass Öl dort schwerkraftbedingt abfließt und nach Durchtritt durch einen Wärmetauscher im Zentrum des Getriebegehäuses aufgrund des dort niedrigeren Ölniveaus wieder zuströmt. Bei dem zweiten beschriebenen Anwendungsfall wird das im Getriebegehäuses aufgrund einer Rotation eines Getriebeelements in Richtung auf die Innenwand des Getriebegehäuses beschleunigt und tritt aufgrund der resultierenden Druckverhältnisse in eine dort angekoppelte Leitung ein und tritt im Zentrum des Zentrum des Getriebegehäuses aufgrund des dort niedrigeren Ölniveaus wieder in das Getriebegehäuse ein.

Aus der WO 88/06678 A1 ist eine ebenfalls auf einer Bewegung des in einem Getriebegehäuse befindlichen Öls mittels eines Getriebeelements basierende Ölkühlung bekannt. Dort wird mittels des Getriebeelements das Öl entweder auf ein höheres Niveau befördert, von wo aus es schwerkraftbedingt durch einen Kühler zurück in das Getriebegehäuse fließt oder das Öl mittels des Getriebeelements beschleunigt und dabei in einen zu einem Kühler führenden Kanal gedrückt.

Nachteilig bei diesen aus dem Stand der Technik bekannten Ansätzen ist, dass nach wie vor keine einfache Passivlösung zur Entwärmung des Getriebes zur Verfügung steht.

Der Erfindung liegt daher die Aufgabe zugrunde, eine solche einfache Passivlösung anzugeben, die unabhängig von einer Drehrichtung eines zur Bewegung des Öls wirksamen Getriebeelements ist.

Diese Aufgabe wird erfindungsgemäß mittels eines Getriebes mit den Merkmalen des Anspruchs 1 gelöst. Dazu ist bei einem Getriebe mit einem Getriebegehäuse und zumindest einem in dem Getriebegehäuse rotierenden und dabei in einen Schmierstoff eintauchenden Getriebeelement, insbesondere einem Stirnrad des Getriebes, Folgendes als Mittel zur Kühlung eines in dem Getriebe vorhandenen Schmierstoffs vorgesehen: Unterhalb eines Schmierstoffniveaus sind zumindest ein erster und zumindest ein zweiter Schmierstoffleitungsanschluss an das Getriebegehäuse angekoppelt. Der oder jeder erste und der oder jeder zweite Schmierstoffleitungsanschluss ist außerhalb des Getriebegehäuses mittels einer Schmierstoffleitung oder mehrerer Schmierstoffleitungen miteinander verbunden. Die oder jede Schmierstoffleitung ist mit zumindest einer oberflächenvergrößernden Einrichtung, also zum Beispiel Kühlblechen oder Kühlrippen, versehen.

Der zweite Schmierstoffleitungsanschluss ist in einem Bereich zwischen dem zumindest einen in den Schmierstoff eintauchenden Getriebeelement und einer Staukante im Innern des Getriebegehäuses an dieses angekoppelt. Die Staukante vor dem zweiten Schmierstoffleitungsanschluss bewirkt bei einer entsprechenden Drehrichtung des in das Getriebeöl eintauchenden Getriebeelements und entsprechend einer Förderung des Getriebeöls im Ölsumpf in Richtung auf die Staukante eine lokale Niveau-/Druckerhöhung im Ölsumpf vor der Staukante, so dass Öl aus dem Ölsumpf in den zweiten Schmierstoffleitungsanschluss und von dort in die anschließende Schmierstoffleitung eintritt. Die Verwendung einer Staukante im Innern des Getriebegehäuses und im Ölsumpf macht den hier vorgeschlagenen Ansatz für unterschiedliche Drehrichtungen des Getriebes und dessen zumindest eines in das Getriebeöl eintauchendes Getriebeelement verwendbar. Bei einer ersten Drehrichtung fördert dieses Getriebeelement das Öl im Ölsumpf zum Beispiel gegen die Innenoberfläche einer Seitenwand des Getriebegehäuses, insbesondere die Rückwand des Getriebegehäuses, und in den dort angekoppelten ersten Schmierstoffleitungsanschluss. Bei einer zweiten Drehrichtung fördert dieses Getriebeelement Öl im Ölsumpf gegen die Staukante und in den vor der Staukante angekoppelten zweiten Schmierstoffleitungsanschluss. Je nach den konkreten Abmessungen des Inneren des Getriebegehäuses kann an die Stelle der hier erwähnten Staukante eine weitere Seitenwand des Getriebegehäuses oder an die Seitenwand, insbesondere die Rückwand des Getriebegehäuses, eine weitere Staukante treten.

Als Schmierstoff fungiert üblicherweise ein im Folgenden entsprechend dem üblichen Sprachgebrauch als Getriebeöl oder kurz als Öl bezeichnetes Schmieröl. Die weitere Beschreibung wird demnach im Interesse einer besseren Lesbarkeit, aber ohne Verzicht auf eine weitergehende Allgemeingültigkeit, am Beispiel von Getriebeöl (Öl) als Schmierstoff fortgesetzt. Des Weiteren wird - ebenfalls im Interesse einer besseren Lesbarkeit der hier vorgelegten Beschreibung - diese anhand genau eines ersten und genau eines zweiten Schmierstoffleitungsanschlusses und entsprechend einer die beiden Schmierstoffleitungsanschlüsse verbindenden Schmierstoffleitung fortgesetzt. Dabei ist jeweils die Möglichkeit mehrerer erster und zweiter Schmierstoffleitungsanschlüsse sowie die Möglichkeit mehrerer jeweils zumindest zwei Schmierstoffleitungsanschlüsse miteinander verbindender Schmierstoffleitungen mitzulesen.

Der Vorteil der Erfindung besteht darin, dass der erste und der zweite Schmierstoffleitungsanschluss unterhalb eines üblichen Getriebeölniveaus im Innern des Getriebegehäuses angebracht sind und im Innern des Getriebegehäuses demnach, anders als zum Beispiel bei der DE 10 2009 004 942 A1, keine besonderen Leitflächen oder dergleichen zum Transport des aus dem Ölsumpf herausbeförderten und über das Niveau des Ölsumpfs angehobenen Getriebeöls erforderlich sind. Im Vergleich zu zum Beispiel der DE 10 2009 061 042 A1 wird ebenso keine Öl-Abstreifvorrichtung oder dergleichen benötigt.

Der Transport des Getriebeöls erfolgt bei dem hier vorgeschlagenen Ansatz ausschließlich aufgrund eines sich beim Betrieb des Getriebes im Ölsumpf einstellenden lokalen Druckunterschieds aufgrund des Staudrucks des Öls, welcher zu einer lokalen Erhöhung und Absenkung des Schmierstoffniveaus (Getriebeölniveaus) führt. Der lokale Druckunterschied ergibt sich beim Betrieb des Getriebes aufgrund einer rotationsbedingten Förderwirkung zumindest eines in das Getriebeöl eintauchenden Getriebeelements. Dieses ist in jedem Fall Bestandteil des Getriebes und entsprechend in keiner Form ein etwa zum Zwecke der Kühlung des Getriebes notwendiges Zusatzteil. Das in das Getriebeöl eintauchende Getriebeelement bewegt das Getriebeöl entsprechend der jeweiligen Drehrichtung im Innern des Getriebegehäuses. Der daraus im Ölsumpf resultierende Niveau-/ Druckunterschied bewirkt, dass das Getriebeöl aus dem Ölsumpf und aus dem Innern des Getriebegehäuses in den ersten oder zweiten Schmierstoffleitungsanschluss und von dort in die anschließende und außerhalb des Getriebegehäuses verlaufende Schmierstoffleitung gelangt. Im Bereich der außerhalb des Getriebegehäuses verlaufenden Schmierstoffleitung wird zumindest ein Teil der vom Getriebeöl mitgeführten Wärme auf Konvektionsbasis abgegeben. Zu diesem Zweck ist die Schmierstoffleitung zumindest abschnittsweise mit zumindest einer oberflächenvergrößernden Einrichtung, zum Beispiel Kühlrippen und/oder Kühlblechen, versehen. Im Ergebnis resultiert eine Entwärmung des Getriebeöls und beim Wiedereintritt des zuvor aus dem Getriebegehäuse ausgeleiteten Getriebeöls gelangt dieses mit einer geringeren Temperatur zurück in den Ölsumpf und bewirkt damit insgesamt eine Kühlung des Getriebes (Ölumlaufkühlung).

Die oben genannte Aufgabe wird ebenfalls mittels eines Verfahrens zum Betrieb eines Getriebes der hier und im Folgenden beschriebenen Art gelöst. Bei dem Verfahren ist vorgesehen, dass das zumindest eine in dem Getriebegehäuse rotierende und dabei in das dortige Getriebeöl eintauchende Getriebeelement je nach Drehrichtung Getriebeöl über den ersten oder den zweiten Schmierstoffleitungsanschluss in die Schmierstoffleitung fördert, dass das durch die Schmierstoffleitung strömende Öl auf Konvektionsbasis gekühlt wird und mit einer reduzierten Temperatur über den zweiten bzw. ersten Schmierstoffleitungsanschluss wieder in das Getriebegehäuse eintritt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform des Getriebes ist der erste Schmierstoffleitungsanschluss auf einer Rückseite des Getriebegehäuses an dieses angekoppelt. Damit verläuft die an den ersten Schmierstoffleitungsanschluss anschließende Schmierstoffleitung zumindest zum Teil selbst auf einer Rückseite des Getriebegehäuses. Auf einer solchen Rückseite des Getriebegehäuses ist eine mittels eines an der Getriebewelle angebrachten Lüfterrads erzeugte Luftströmung entweder turbulent und daher vorher schon abgerissen und demnach auch nicht mehr vorhanden oder aber deswegen nicht vorhanden, weil aus Kostengründen oder sonstigen Gründen keine Kühlung mittels eines Lüfterrads vorgesehen ist. Die Entwärmung des aus dem Innern des Getriebegehäuses ausgeleiteten und durch die Schmierstoffleitung strömenden Getriebeöls kann damit ausschließlich aufgrund einer sich bei einer Entwärmung der Schmierstoffleitung sowie deren oberflächenvergrößernder Einrichtung einstellenden Konvektionsströmung erfolgen. Diese wird selbst bei einer Verwendung eines Lüfterrads durch die davon erzeugte Luftströmung nicht nennenswert gestört und bei einer geeigneten Führung des Lüfterrad-Luftstroms, nämlich in einen Bereich oberhalb des Bereichs, in dem sich die Konvektionsströmung ausbildet, durch die lokale Erzeugung eines Unterdrucks sogar noch unterstützt.

Bei einer weiteren Ausführungsform ist der zweite Schmierstoffleitungsanschluss auf einer Unterseite des Getriebegehäuses an dieses angekoppelt. Bei einem an der Unterseite des Getriebegehäuses angekoppelten Schmierstoffleitungsanschluss gelangt das Getriebeöl aufgrund des durch die Rotation des in das Getriebeöl eintauchenden Getriebeelements und resultierender Planscheffekte lokal erhöhten Schmierstoffniveaus gegebenenfalls auch ohne Staukante in den zweiten Schmierstoffleitungsanschluss. Zudem verläuft bei einem an der Unterseite des Getriebegehäuses angekoppelten Schmierstoffleitungsanschluss die Schmierstoffleitung selbst zumindest abschnittsweise entlang der Unterseite des Getriebegehäuses, so dass im Ergebnis auch eine Kühlung der Unterseite des Getriebegehäuses resultiert.

Bei einer weiteren besonderen Ausführungsform des Getriebes ist die Schmierstoffleitung zumindest abschnittsweise derart neben dem Getriebegehäuse geführt, dass sich in einem Spalt zwischen der Schmierstoffleitung und dem Getriebegehäuse eine aufsteigende Konvektionsströmung ausbildet. Die Konvektionsströmung bewirkt zum einen eine Kühlung der Schmierstoffleitung und deren oberflächenvergrößernder Einrichtung oder Einrichtungen. Bei einem geeigneten Abstand zum Getriebegehäuse bewirkt die Konvektionsströmung zum anderen aber auch eine Kühlung des dem betreffenden Abschnitt der Schmierstoffleitung benachbarten Getriebegehäuseabschnitts und damit eine zusätzliche Kühlung des Getriebes.

Bei einer solchen Anordnung der Schmierstoffleitung relativ zum Getriebegehäuse kann vorgesehen sein, dass in dem Spalt zwischen der Schmierstoffleitung und dem Getriebegehäuse ein Luftleitblech angeordnet ist. Dieses bewirkt eine Kanalisierung der sich aufgrund der Temperatur der Schmierstoffleitung und deren oberflächenvergrößernder Einrichtung(en) einstellenden Konvektionsströmung. Bei einer besonderen Ausführungsform eines Getriebes, bei dem sich zwischen der Schmierstoffleitung und dem Getriebegehäuse ein Luftleitblech befindet, ist vorgesehen, dass dieses abgewinkelt ist und mit einem ersten und einem zweiten Schenkel zwei Seiten der oberflächenvergrößernden Einrichtung der Schmierstoffleitung zugeordnet ist. In dem von den beiden Schenkeln und der Schmierstoffleitung sowie deren Kühlrippen oder Kühlblechen eingeschlossenen Raum und entsprechend auf der Innenseite des Luftleitblechs umströmt die aufgrund der Konvektionsströmung angesaugte Umgebungsluft die Schmierstoffleitung und die Kühlrippen oder Kühlbleche. Auf der gegenüberliegenden Außenseite des Luftleitblechs strömt die aufgrund der Konvektionsströmung angesaugte kühle Umgebungsluft entlang der Außenseite des Getriebegehäuses sowie dort gegebenenfalls vorhandener Kühlrippen. Die Trennung der beiden Luftströme vermeidet Turbulenzen, trennt die warme Konvektionsströmung von der kühleren Umgebungsluftströmung und gewährleistet entsprechend einen kontinuierlichen und hohen Volumenstrom und damit eine besonders gute Kühlwirkung.

Bei einer weiteren besonderen Ausführungsform des Getriebes umfasst die oberflächenvergrößernde Einrichtung der Schmierstoffleitung radiale und/oder axiale Kühlbleche oder Kühlrippen. Die radiale oder axiale Orientierung der Kühlrippen oder Kühlbleche richtet sich bevorzugt nach einer Orientierung von eventuellen Kühlrippen in einem dem betreffenden Abschnitt der Schmierstoffleitung benachbarten Abschnitt einer Außenseite des Getriebegehäuses, so dass die Kühlbleche/Kühlrippen der Schmierstoffleitung und eventuelle Kühlrippen an der Außenseite des Getriebegehäuses parallel verlaufen. Beide Strukturen sind dabei zur Kanalisierung des resultierenden Luftstroms wirksam. Turbulenzen werden vermieden.

Unter Berücksichtigung der sogenannten elektrogalvanischen Reihe ist bei einer nochmals weiteren Ausführungsform des Getriebes die Schmierstoffleitung aus Kupfer oder Aluminium gefertigt. Dies hat den Vorteil, dass die Wärmeleitung durch die Wand der Schmierstoffleitung in erheblichem Maße gesteigert wird, anders als dies zum Beispiel bei einer Wärmeleitung durch das üblicherweise als Metallgussgehäuse ausgeführte Getriebegehäuse möglich ist. Damit ergibt sich eine erheblich größere Temperaturdifferenz zwischen der Umgebungsluft und der Schmierstoffleitung sowie den an die Schmierstoffleitung anschließenden Kühlrippen/Kühlblechen, als sie an der Gehäusewand auftritt. Im Ergebnis resultiert eine Konvektionsströmung um die Schmierstoffleitung in einem Umfang, wie sie sich an der Gehäusewand alleine nicht ausbilden wird und damit eine deutlich verbesserte Kühlwirkung.

Die höhere Wärmeleitfähigkeit der Rohrleitung führt vorteilhaft zudem dazu, dass bei einem Kaltanlauf des Getriebes, bei dem das Getriebeöl zunächst hochviskos vorliegt und nur durch innere Reibung erwärmt werden kann, das in der Schmierstoffleitung befindliche Getriebeöl aufgrund von Wärmeleitung durch die Rohrwandung erwärmt und damit niedrigviskoser wird. Die Umlaufkühlung kann dann bei genügender Erwärmung selbsttätig einsetzen.

Ein weiterer Vorteil des hier vorgeschlagenen Ansatzes besteht darin, dass die Nutzung des Staudruckes bzw. des Schmierstoffniveaus für den Umlauf dazu führt, dass das Schmierstoffniveau prinzipbedingt abgesenkt wird. Dies führt zu einer Verringerung der Planschverluste und damit zu einer Verringerung der Verlustleistung. Das fördernde Rad arbeitet gegen ein geringeres Schmierstoffniveau sowie gegen einen geringeren Staudruck. Auch dies fördert die durch das Getriebe leitbare Grenzleistung, da weniger Verluste in Wärme umgewandelt werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Getriebe entsprechend dem hier vorgeschlagenen Ansatz,
- FIG 2: das Getriebe gemäß FIG 1 in einem anderen Betriebszustand und
- FIG 3: eine isometrische Ansicht eines Ausschnitts aus dem Getriebe gemäß FIG 1, FIG 2.

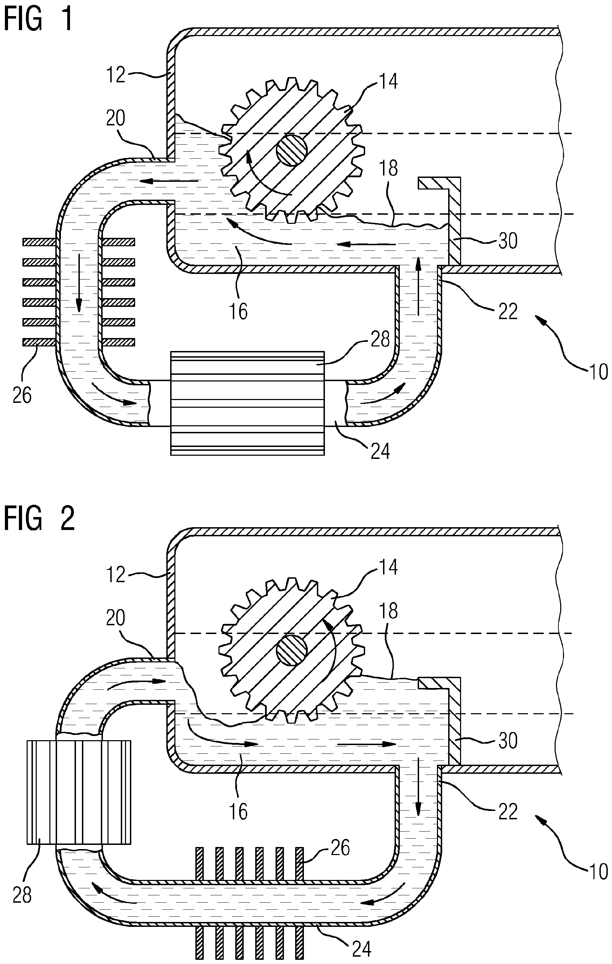

Die Darstellung in FIG 1 zeigt in schematisch stark vereinfachter Form ein Getriebe 10 ohne besondere Details, mit einem das Getriebe 10 umgebenden Getriebegehäuse 12 und einem im Innern des Getriebegehäuses 12 rotierenden Getriebeelement 14, nämlich einem Getriebeelement 14 in Form eines Stirnrads.

Im Innern des Getriebegehäuses 12 befindet findet sich in an sich bekannter Art und Weise zur Schmierung des Getriebeelements 14 und weiterer, nicht gezeigter Getriebeelemente ein im Folgenden entsprechend der üblichen Terminologie, aber ohne Verzicht auf eine weitergehende Allgemeingültigkeit, als Getriebeöl 16 bezeichneter Schmierstoff. Unterhalb eines Schmierstoffniveaus/Getriebeölniveaus 18 sind ein erster und ein zweiter Schmierstoffleitungsanschluss 20, 22 in dem Getriebegehäuse 12 gebildet oder an das Getriebegehäuse 12 angekoppelt. Die beiden Schmierstoffleitungsanschlüsse 20, 22 sind außerhalb des Getriebegehäuses 12 mittels einer Schmierstoffleitung 24 miteinander verbunden. Die Schmierstoffleitung 24 ist mit zumindest einer oberflächenvergrößernden Einrichtung, zum Beispiel Kühlblechen 26 oder Kühlrippen, versehen.

Das Getriebeelement 14 taucht in das Getriebeöl 16 ein und bewegt dieses beim Betrieb des Getriebes 10 in der jeweiligen Drehrichtung. Dadurch ergibt sich ein lokaler Niveau-/Druckunterschied im Getriebeöl 16. Der erste Schmierstoffleitungsanschluss 20 ist in einem Bereich an eine Seitenwand des Getriebegehäuses 12, zum Beispiel die der hier nicht gezeigten Antriebswelle gegenüberliegende Rückwand des Getriebegehäuses 12, angekoppelt. Hier stellt sich beim Betrieb des Getriebes 10 und aufgrund einer in FIG 1 durch den Pfeil auf dem Getriebeelement 14 veranschaulichten Drehrichtung lokal eine Erhöhung des Getriebeölniveaus 18 sowie als Folge lokal ein Überdruck in dem Getriebeöl 16 ein.

Die lokale Niveau-/Druckerhöhung im Bereich des ersten Schmierstoffleitungsanschlusses 20 und, damit einhergehend, die Niveauabsenkung auf der gegenüberliegenden Seite des Getriebeelements 14 bewirkt, dass beim Betrieb des Getriebes 10 Getriebeöl 16 in den ersten Schmierstoffleitungsanschlusses 20 eintritt und damit in die anschließende Schmierstoffleitung 24 gelangt. Die resultierende Flussrichtung des Getriebeöls 16 in der Schmierstoffleitung 24 ist in der Darstellung in FIG 1 durch Pfeile veranschaulicht und am gegenüberliegenden Ende der Schmierstoffleitung 24 tritt das aus dem Getriebegehäuse 12 ausgeleitete Getriebeöl 16 wieder in dieses und den dortigen Ölsumpf ein.

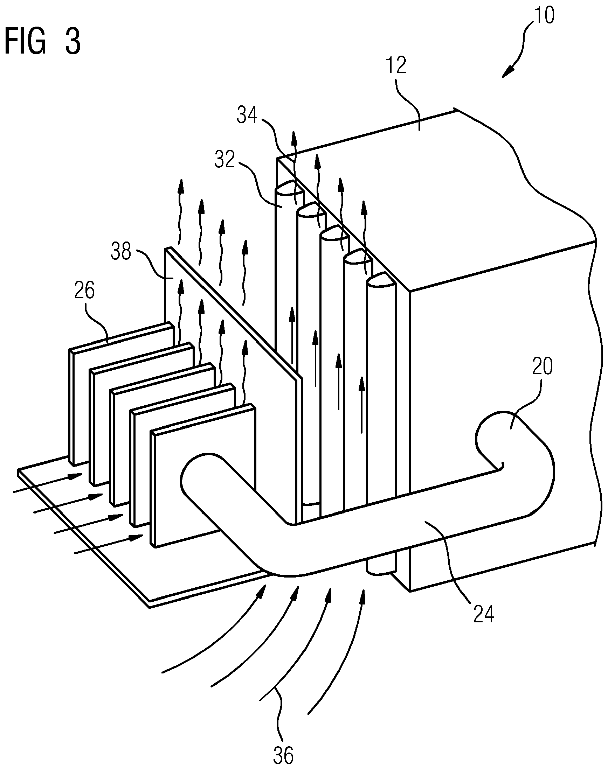

Die von dem durch die Schmierstoffleitung 24 ausgeleiteten Getriebeöl 16 mitgeführte Wärme wird durch Konvektion an die Wandung der Schmierstoffleitung 24 und von dort an die oder jede die Schmierstoffleitung 24 zumindest abschnittsweise umgebende oberflächenvergrößernde Einrichtung, zum Beispiel Kühlbleche 26, 28 oder Kühlrippen, abgegeben. Durch weitere Konvektion wird die Wärme an die Umgebungsluft abgegeben und aufsteigende erwärmte Umgebungsluft führt in an sich bekannter Art und Weise zu einer Konvektionsströmung 34, 36 (FIG 3), welche die Wärmeabgabe an die nachströmende kältere Umgebungsluft begünstigt.

In der Darstellung in FIG 1 ist auf einer dem ersten Schmierstoffleitungsanschluss 20 gegenüberliegenden Seite des in das Getriebeöl 16 eintauchenden Getriebeelements 14 eine grundsätzlich optionale Staukante 30 gezeigt. Die Staukante 30 bewirkt bei einer im Vergleich zu der in FIG 1 gezeigten Situation umgekehrten Drehrichtung des Getriebeelements 14 (FIG 2) eine lokale Niveau-/Druckerhöhung vor der Staukante 30.

Die resultierenden Verhältnisse zeigt die Darstellung in FIG 2. Die Staukante 30 ist entbehrlich, wenn auch bei der umgekehrten Drehrichtung des in das Getriebeöl 16 eintauchenden Getriebeelements 14 das durch das Getriebeelement 14 bewegte Getriebeöl 16 gegen eine Seitenwand des Getriebegehäuses 12 gefördert wird.

Der zweite Schmierstoffleitungsanschluss 22 ist in einem Bereich zwischen dem in das Getriebeöl 16 eintauchenden Getriebeelement 14 und der Staukante 30 im Innern des Getriebegehäuses 12 (oder einer Getriebegehäuseseitenwand) an das Getriebegehäuse 12 angekoppelt. Beim Betrieb des Getriebes 10 bewegt das in das Getriebeöl 16 eintauchende Getriebeelement 14 das Getriebeöl 16 in der jeweiligen Drehrichtung und es resultiert - genau wie bei der zuvor anhand der Darstellung in FIG 1 beschriebenen Situation - lokal ein erhöhtes Getriebeölniveau 18 und als Folge ein lokaler Überdruck. Aufgrund der lokalen Niveau-/Druckerhöhung tritt das Getriebeöl 16 über den zweiten Schmierstoffleitungsanschluss 22 in die Schmierstoffleitung 24 ein und gelangt am gegenüberliegenden Ende über den ersten Schmierstoffleitungsanschluss 20 wieder in das Getriebegehäuse 12 und den dortigen Ölsumpf. Auf dem Weg durch die Schmierstoffleitung 24 erfolgt die bereits beschriebene Entwärmung, die im Ergebnis zu einer Kühlung des Getriebes 12 führt.

Die aufgrund der jeweiligen Drehrichtung des zumindest einen in das Getriebeöl 16 eintauchenden Getriebeelements 14 resultierende lokale Druckerhöhung und die zugrunde liegende lokale Erhöhung des Getriebeölniveaus 18 in Drehrichtung vor dem Getriebeelement 14 und damit einhergehend eine lokale Verringerung des Getriebeölniveaus 18 in Drehrichtung hinter dem Getriebeelement 14 führen zu einem schwerkraftinduzierten Umlauf des aus dem Getriebegehäuse 12 ausgeleiteten Getriebeöls 16. Aufgrund der Entwärmung des ausgeleiteten und durch die Schmierstoffleitung 24 strömenden Getriebeöls 16 ergibt sich insgesamt eine schwerkraftinduzierte Ölumlaufkühlung für das jeweilige Getriebe 10.

Die Darstellung in FIG 3 zeigt eine schematisch vereinfachte isometrische Teilansicht eines Getriebes 10 gemäß FIG 1 und FIG 2. Als oberflächenvergrößernde Einrichtung sind radial orientierte Kühlbleche 26 erkennbar. Die Orientierung der Kühlbleche 26 korrespondiert mit der Orientierung von auf der Außenfläche einer Seitenwand des Getriebegehäuses 12 gebildeten Kühlrippen 32. Die Kühlbleche 26 und die Kühlrippen 32 sind demnach zur Kanalisierung einer durch die eingezeichneten Pfeile veranschaulichten und aufgrund der Wärmeabgabe des ausgeleiteten Getriebeöls 16 an die Schmierstoffleitung 24 und die Kühlbleche 26 resultierenden Konvektionsströmung 34, 36 wirksam. An einem anderen Abschnitt oder anderen Abschnitten der Schmierstoffleitung 24 können sich als oberflächenvergrößernde Einrichtung axial orientierte Kühlbleche 28 oder Kühlrippen (in FIG 3 nicht gezeigt) befinden. In Form der unterschiedlichen Abfolge der radial orientierten Kühlbleche 26 und der axial orientierten Kühlbleche 28 in den Darstellungen in FIG 1 und FIG 2 ist gezeigt, dass es auf die Abfolge nicht ankommt und dass sich die jeweilige Orientierung aufgrund der Orientierung von benachbarten Kühlrippen 32 und dergleichen ergeben kann.

Die Konvektionsströmung 34, 36 ergibt sich aufgrund des durch die Schmierstoffleitung 24 strömenden und im Vergleich zur Umgebungsluft wärmeren Getriebeöls 16. Die mitgeführte Wärme wird durch Konvektion an die Wandung der Schmierstoffleitung 24 und - bei der in FIG 3 gezeigten Situation - an die umgebenden Kühlbleche 26 sowie die diese wiederum umgebende Umgebungsluft abgegeben. Die aufsteigende erwärmte Luft (Konvektionsströmung 34) führt zu einem Nachströmen kälterer Umgebungsluft (Konvektionsströmung 36) und damit insgesamt zu einer Kühlung des aus dem Getriebegehäuse 12 ausgeleiteten und durch die Schmierstoffleitung 24 strömenden Getriebeöls 16.

Bei der in FIG 3 gezeigten Situation verläuft die Schmierstoffleitung 24 benachbart zu einem Abschnitt einer Seitenwand des Getriebegehäuses 12, und zwar in einem solchen Abstand, dass sich die Konvektionsströmung 34, 36 in einem zwischen der Schmierstoffleitung 24 und deren Kühlblechen 26 sowie der benachbarten Getriebegehäusewand und deren Kühlrippen 32 verbleibenden Zwischenraum (Spalt) ausbildet. Die Konvektionsströmung 34, 36 ist damit nicht nur zur Kühlung des durch die Schmierstoffleitung 24 strömenden Getriebeöls 16, sondern auch zur direkten Kühlung des Getriebegehäuses 12 wirksam.

Bei der in FIG 3 gezeigten Ausführungsform befindet sich zwischen der Schmierstoffleitung 24 und deren Kühlblechen 26 einerseits und der gegenüberliegenden Getriebegehäusewand andererseits ein Luftleitblech 38. Das Luftleitblech 38 ist zur zusätzlichen Kanalisierung der Konvektionsströmung 34, 36 wirksam und vermeidet Turbulenzen. Bei der gezeigten Ausführungsform handelt es sich bei dem Luftleitblech 38 um ein geknicktes Luftleitblech 38 mit einem ersten und einem zweiten Schenkel, wobei sich der erste Schenkel zwischen den Kühlblechen 26 der Schmierstoffleitung 24 und den Kühlrippen 32 des Getriebegehäuses befindet und das Luftleitblech 38 mit seinem zweiten Schenkel die Unterseite der Kühlbleche 26 umgreift. Dadurch entsteht auf einer Innenseite der beiden Schenkel des Luftleitblechs 38 ein Abschnitt für Umgebungsluft, welche die Kühlbleche 26 und die Schmierstoffleitung 24 umströmt, sowie auf der Außenseite des Luftleitblechs 38 ein Abschnitt für die Außenwand des Getriebegehäuses 12 anströmende Umgebungsluft.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Angegeben werden ein Getriebe 10 und ein Verfahren zum Betrieb eines Getriebes 10 mit einem Getriebegehäuse 12 und zumindest einem in dem Getriebegehäuse 12 rotierenden und dabei in einen Schmierstoff 16 eintauchenden Getriebeelement 14. Unterhalb eines Schmierstoffniveaus 18 sind ein erster und ein zweiter Schmierstoffleitungsanschluss 20, 22 an das Getriebegehäuse 12 angekoppelt. Der erste und der zweite Schmierstoffleitungsanschluss 20, 22 sind außerhalb des Getriebegehäuses 12 mittels einer Schmierstoffleitung 24 miteinander verbunden. Die Schmierstoffleitung 24 ist mit Kühlblechen 26, 28 oder dergleichen versehen. Der erste Schmierstoffleitungsanschluss 20 ist in einem Bereich an das Getriebegehäuse 12 angekoppelt, in dem sich beim Betrieb des Getriebes 10 aufgrund einer Drehrichtung des Getriebeelements 14 in Drehrichtung des Getriebeelements 14 vor diesem lokal eine Erhöhung des Schmierstoffniveaus 18 sowie ein Überdruck in dem Schmierstoff 16 einstellt. Der durch das Getriebeelement 14 im Innern des Getriebegehäuses 12 bewegte Schmierstoff 16 gelangt damit schwerkraftinduziert in die Schmierstoffleitung 24 und wird so aus dem Getriebegehäuse 12 ausgeleitet. Die lokale Niveau-/Druckerhöhung in Drehrichtung vor dem Getriebeelement 14 geht mit einem verringerten Schmierstoffniveau 18 in Drehrichtung hinter dem Getriebeelement 14 einher. Dort tritt das ausgeleitete und zwischenzeitlich entwärmte Getriebeöl 16 wieder in das Getriebegehäuse 12 ein. Insgesamt ergibt sich eine passive, schwerkraftinduzierte Ölumlaufkühlung.

## Patentansprüche

1. Getriebe (10) mit einem Getriebegehäuse (12) und zumindest einem in dem Getriebegehäuse (12) rotierenden und dabei in einen Schmierstoff (16)eintauchenden Getriebeelement (14),
wobei unterhalb eines Schmierstoffniveaus (18) ein erster und ein zweiter Schmierstoffleitungsanschluss (20, 22) an das Getriebegehäuse (12) angekoppelt sind,
wobei der erste und der zweite Schmierstoffleitungsanschluss (20, 22) außerhalb des Getriebegehäuses (12) mittels einer Schmierstoffleitung (24) miteinander verbunden sind und die Schmierstoffleitung (24) mit zumindest einer oberflächenvergrößernden Einrichtung (26, 28) versehen ist und
der erste Schmierstoffleitungsanschluss (20) in einem Bereich an das Getriebegehäuse (12) angekoppelt ist, in dem sich beim Betrieb des Getriebes (10) und aufgrund einer Drehrichtung des zumindest einen in den Schmierstoff (16) eintauchenden Getriebeelements (14) lokal ein Überdruck in dem Schmierstoff (16) einstellt,
**dadurch gekennzeichnet,**
**dass** der zweite Schmierstoffleitungsanschluss (22) in einem Bereich zwischen dem zumindest einen in den Schmierstoff (16) eintauchenden Getriebeelement (14) und einer Staukante (30) im Innern des Getriebegehäuses (12) an dieses angekoppelt ist.

2. Getriebe (10) nach Anspruch 1, wobei der erste Schmierstoffleitungsanschluss (20) auf einer Rückseite des Getriebegehäuses (12) an dieses angekoppelt ist.

3. Getriebe (10) nach Anspruch 1 oder 2, wobei der zweite Schmierstoffleitungsanschluss (22) auf einer Unterseite des Getriebegehäuses (12) an dieses angekoppelt ist.

4. Getriebe (10) nach einem der vorangehenden Ansprüche, wobei die Schmierstoffleitung (24) zumindest abschnittsweise derart neben dem Getriebegehäuse (12) geführt ist, dass sich zwischen der Schmierstoffleitung (24) und dem Getriebegehäuse (12) eine aufsteigende Konvektionsströmung ausbildet.

5. Getriebe (10) nach Anspruch 4, wobei in einem Spalt zwischen der Schmierstoffleitung (24) und dem Getriebegehäuse (12) ein Luftleitblech (38) angeordnet ist.

6. Getriebe (10) nach Anspruch 5, wobei das Luftleitblech (38) abgewinkelt ist und mit einem ersten und einem zweiten Schenkel zwei Seiten der oberflächenvergrößernden Einrichtung (26, 28) der Schmierstoffleitung (24) zugeordnet ist.

7. Getriebe (10) nach einem der vorangehenden Ansprüche, wobei die oberflächenvergrößernde Einrichtung (26, 28) der Schmierstoffleitung (24) radiale und/oder axiale Kühlbleche (26) umfasst.

8. Getriebe (10) nach Anspruch 7, wobei die oberflächenvergrößernde Einrichtung (26, 28) der Schmierstoffleitung (24) radiale und/oder axiale Kühlbleche (26) derart umfasst, dass die Kühlbleche (26)jeweils parallel zu Kühlrippen (32) eines benachbarten Abschnitts des Getriebegehäuses (12) ausgerichtet sind.

9. Getriebe (10) nach einem der vorangehenden Ansprüche, wobei die Schmierstoffleitung (24) aus Kupfer oder Aluminium gefertigt ist.

10. Verfahren zum Betrieb eines Getriebes (10) nach einem der vorangehenden Ansprüche, wobei das zumindest eine in dem Getriebegehäuse (12) rotierende und dabei in einen Schmierstoff (16) eintauchende Getriebeelement (14) je nach Drehrichtung Schmierstoff (16) über den ersten oder den zweiten Schmierstoffleitungsanschluss (20, 22) in die Schmierstoffleitung (24) fördert und wobei der durch die Schmierstoffleitung (24) strömende Schmierstoff (16) auf Konvektionsbasis gekühlt wird und mit einer reduzierten Temperatur über den zweiten bzw. ersten Schmierstoffleitungsanschluss (20, 22) wieder in das Getriebegehäuse (12) eintritt.

## Claims

1. Gearbox (10) with a gearbox housing (12) and at least one gearbox element (14) rotating in the gearbox housing (12) and, in doing so, immersing in a lubricant (16),
wherein, below a lubricant level (18), a first and a second lubricant line connector (20, 22) are coupled to the gearbox housing (12),
wherein the first and the second lubricant line connector (20, 22) are interconnected outside the gearbox housing (12) by means of a lubricant line (24) and the lubricant line (24) is provided with at least one surface-enlarging device (26, 28) and
the first lubricant line connector (20) is coupled to the gearbox housing (12) in a region in which, during operation of the gearbox (10), and as a result of a direction of rotation of the at least one gearbox element (14) immersing in the lubricant (16), an overpressure arises locally in the lubricant (16),
**characterised in that**
the second lubricant line connector (22) is coupled to the gearbox housing (12) in a region between the at least one gearbox element (14) immersing in the lubricant (16) and a retaining edge (30) in the interior of the gearbox housing (12) .

2. Gearbox (10) according to claim 1, wherein the first lubricant line connector (20) is coupled to the gearbox housing (12) at a rear edge of the gearbox housing (12).

3. Gearbox (10) according to claim 1 or 2, wherein the second lubricant line connector (22) is coupled to the gearbox housing (12) at an underside of the gearbox housing (12).

4. Gearbox (10) according to one of the preceding claims, wherein the lubricant line (24) is guided next to the gearbox housing (12) at least in sections, such that a rising convective current develops between the lubricant line (24) and the gearbox housing (12).

5. Gearbox (10) according to claim 4, wherein an air baffle (38) is arranged in a gap between the lubricant line (24) and the gearbox housing (12).

6. Gearbox (10) according to claim 5, wherein the air baffle (38) is angled and is assigned to two sides of the surface-enlarging device (26, 28) of the lubricant line (24) with a first and a second leg.

7. Gearbox (10) according to one of the preceding claims, wherein the surface-enlarging device (26, 28) of the lubricant line (24) comprises radial and/or axial cooling plates (26).

8. Gearbox (10) according to claim 7, wherein the surface-enlarging device (26, 28) of the lubricant line (24) comprises radial and/or axial cooling plates (26) such that the cooling plates (26) are in each case oriented parallel to cooling ribs (32) of an adjacent section of the gearbox housing (12).

9. Gearbox (10) according to one of the preceding claims, wherein the lubricant line (24) is manufactured from copper or aluminium.

10. Method for operating a gearbox (10) according to one of the preceding claims, wherein the at least one gearbox element (14) rotating in the gearbox housing (12) and, in doing so, immersing in a lubricant (16), depending on the direction of rotation, guides lubricant (16) into the lubricant line (24) via the first or the second lubricant line connector (20, 22) and wherein the lubricant (16) flowing through the lubricant line (24) is cooled on the basis of convection and re-enters the gearbox housing (12) at a reduced temperature via the second or first lubricant line connector (20, 22).

## Revendications

1. Engrenage (10) ayant un carter (12) et au moins un élément (14) d'engrenage tournant dans le carter (12) et plongeant dans un lubrifiant (16),
dans lequel, en dessous d'un niveau (18) de lubrifiant, un premier et un deuxième raccords (20, 22) de conduit de lubrifiant sont reliés au carter (12),
dans lequel le premier et le deuxième raccords (20, 22) de lubrifiant communiquent entre eux à l'extérieur du carter (12) au moyen d'un conduit (24) pour du lubrifiant et le conduit (24) pour du lubrifiant est pourvu d'au moins un dispositif (26, 28) augmentant la surface et
le premier raccord (20) de conduit de lubrifiant est relié au carter (12) dans une partie où, lorsque l'engrenage (10) fonctionne et en raison d'un sens de rotation du au moins un élément (14) d'engrenage plongeant dans le lubrifiant (16), il s'établit localement une surpression dans le lubrifiant (16),
**caractérisé**
**en ce que** le deuxième raccord (22) de conduit de lubrifiant est dans une partie entre le moins un élément (14) d'engrenage plongeant dans le lubrifiant (16) et un bord (30) de retenue à l'intérieur du carter (12) relié à celui-ci.

2. Engrenage (10) suivant la revendication 1, dans lequel le premier raccord (20) de conduit de lubrifiant est d'un côté arrière du carter (12) relié à celui-ci.

3. Engrenage (10) suivant la revendication 1 ou 2, dans lequel le deuxième raccord (22) de lubrifiant est d'un côté inférieur du carter (12) relié à celui-ci.

4. Engrenage (10) suivant l'une des revendications précédentes, dans lequel le conduit (24) pour du lubrifiant passe au moins par tronçon à côté du carter (12) de manière à former un courant de convexion ascendant entre le conduit (24) pour du lubrifiant et le carter (12).

5. Engrenage (10) suivant la revendication 4, dans lequel un déflecteur (38) d'air est monté dans une fente entre le conduit (24) pour du lubrifiant et le carter (12).

6. Engrenage (10) suivant la revendication 5, dans lequel le déflecteur (38) d'air est coudé et, à une première et une deuxième branches, sont associés deux côtés du dispositif (26, 28) agrandissant la surface du conduit (24) pour de l'air.

7. Engrenage (10) suivant l'une des revendications précédentes, dans lequel le dispositif (26, 28) agrandissant la surface du conduit (24) pour du lubrifiant comprend des tôles (26) de refroidissement radiales et/ou axiales.

8. Engrenage (10) suivant la revendication 7, dans lequel le dispositif (26, 28) agrandissant la surface du conduit (24) pour du lubrifiant comprend des tôles (26) de refroidissement radiales et/ou axiales, de manière à ce que les tôles (26) de refroidissement soient dirigées chacune parallèlement à des ailettes (32) de refroidissement d'une partie voisine du carter (12).

9. Engrenage (10) suivant l'une des revendications précédentes, dans lequel le conduit (24) pour du lubrifiant est en cuivre ou en aluminium.

10. Procédé pour faire fonctionner un engrenage (10) suivant l'une des revendications précédentes, dans lequel le au moins un élément (14) d'engrenage, tournant dans le carter (10) et plongeant ainsi dans un lubrifiant (16), transporte, suivant le sens de rotation, du lubrifiant (16) par l'intermédiaire du premier ou du deuxième raccord (20, 22) de conduit de lubrifiant dans le conduit (24) pour du lubrifiant et dans lequel le lubrifiant (16) passant dans le conduit (24) pour du lubrifiant est refroidi par convexion et entre, en ayant une température réduite, à nouveau dans le carter (12) en passant par le deuxième ou respectivement le premier raccord (20, 22) de conduit de lubrifiant.
